Europäisches Patentamt

(19) European Patent Office

Office européen des brevets

(11) Publication number: **0 287 143 B1**

(12) **EUROPEAN PATENT SPECIFICATION**

(45) Date of publication of patent specification:
10.07.91 Bulletin 91/28

(51) Int. Cl.⁵: **B65H 43/02**, B65H 5/14, G01R 33/06, H03K 3/59

(21) Application number: 88200510.1

(22) Date of filing: 09.09.85

(54) Gripper arm with mistake detector.

(30) Priority: 07.09.84 US 648391
07.09.84 US 648399

(43) Date of publication of application:
19.10.88 Bulletin 88/42

(60) Publication number of the earlier application in accordance with Art. 76 EPC: 0174214

(45) Publication of the grant of the patent:
10.07.91 Bulletin 91/28

(84) Designated Contracting States:
CH DE FR GB LI SE

(56) References cited:
DE-A- 3 323 197
US-A- 4 426 785

(73) Proprietor: BELL & HOWELL COMPANY
6800 McCormick Road
Chicago Illinois 60645/2797 (US)

(72) Inventor: Zemke, Edward H.
610 W.Patterson
Chicago Illinois 606034 (US)
Inventor: Vandersyde, Gary L.
603 E.Bauer Road
Naperville Illinois (US)
Inventor: Rabindran, George K.
8900 Marmora
Morton Grove Illinois (US)
Inventor: Guenther, Kenneth L.
809 North Merril Avenue
Park Ridge Illinois (US)

(74) Representative: Smith, Philip Antony et al
REDDIE & GROSE 16 Theobalds Road
London WC1X 8PL (GB)

EP 0 287 143 B1

## Description

This invention pertains to document sheet feeding structures suitable for use with insertion machines and the like, and in particular to a gripper arm with a mistake detector for determining whether a proper number of sheets are engaged between the jaws of the gripper arm.

The present application is divided out of European Patent Application No. 85306389.9 and reference is made to the published specification No. 0174214 of that application for description of an insertion machine in which the gripper arm of the present invention is used to pick up articles from a stack for insertion in an envelope.

U.S. Patent Specification No. 3,744,787 describes a gripper arm having two jaws for gripping articles and means for detecting mistakes in gripping of the articles by monitoring the relative positions of the jaws. A two-pole switch is used for monitoring jaw position. When a single sheet is held between the jaws the switch element is between the two poles ; when no sheet is present one pole is contacted to trigger a "miss" detector ; when two sheets are present the other pole is contacted to trigger a "double" detector.

The use of Hall-effect sensors as detectors is known in other fields and in U.S. Specification No. 4,426,785 (Loftus et.al.) the movement of a magnet towards and away from a Hall-effect sensor is used in a sheet feeder to monitor the thickness of sheets being fed by the feeder, the output of the sensor being compared with a threshold value to indicate presence of a double thickness or fold.

These prior devices both give a yes/no indication and are not suitable where the jaws of a gripper arm are expected to pick up articles or groups of articles which have various thicknesses, all of which are "correct" in different circumstances. Insertion machines may handle several jobs a day with the types, and hence the thicknesses, of the insert documents at a given insert station varying from job to job. In addition, the type and thicknesses of the insert documents usually vary from station to station for the same job. Hence, mistake detectors for an insertion machine must generally be calibrated for each insert station for each job. Calibration in the past has proven delicate and time consuming inasmuch as precise mechanical adjustments must be made for the mistake detector apparatus at each station for each job. At the beginning of each new job skilled technicians have heretofore had to spend precious machine down time slowly moving from station to station making painstaking, precision adjustments to the mistake detector at each station.

In accordance with the present invention there is provided a gripper arm having two jaws for gripping articles and means for detecting mistakes in gripping of the articles by monitoring the relative positions of the jaws, the mistake-detecting means comprising magnetic field creating means connected to one jaw and a Hall effect sensor connected to the other jaw, the output of the sensor being compared by a comparison means with a reference signal to determine if the output generated by the sensor is within predetermined limits of the reference signal so as to determine if the proper number of articles are engaged by the gripper arm, characterized in that the sensor presents a first planar surface and the magnetic-field-creating means has a second, planar surface which is biased against said first planar surface, the arrangement being such that as the jaw members effect their gripping movement sliding displacement occurs between the two planar surfaces thereby changing the output of the sensor.

In a gripper arm in accordance with the invention which will be described in more detail below there is provision for detecting article engagement errors and for calibrating engagement error detection equipment associated with the gripper arm. Field-generating means is mounted on one jaw member while a sensor is connected on the other jaw member. The signal generated by the sensor is indicative of the flux density of the field created by the generating means. The sensed flux density of the generated field is a function of the relative displacement of the first and second jaw members. The signal generated by the sensor is accordingly related to the separation of the first jaw member and second jaw member. If the sensor-generated signal is within predetermined limits of a stored reference signal a proper number of articles are engaged between the first and second jaw members.

The field generating means is magnetic means and the sensor is a Hall Effect sensor. The magnetic means is mounted on a movable jaw member of an insertion machine while the sensor is connected to the other jaw member. In this regard, "connected to the other jaw member" means that the sensor can be directly mounted on the jaw member or mounted on gripper jaw structure to which the jaw member is connected. The magnetic means and sensor are so positioned with respect to one another that the magnetic means "slides by" the sensor as the movable jaw member is displaced relative to the other jaw member. The voltage generated by the sensor is related to the magnitude of the displacement of the two jaw members.

Means are provided for sensing the relative displacement of the gripper jaws and for generating an electrical signal proportional thereto. When a proper number of documents are engaged by the gripper arm, the signal proportional to the proper relative displacement of the gripper is stored electrically as a calibrated reference signal. Thereafter, when it is desirable to detect a double or a miss, the stored reference signal is compared to signals proportional to limits for acceptable jaw displacement and an error signal is generated when either

2

of the limit signals are outside predetermined limits. The mistake detectors for a plurality of insert stations can be calibrated one-at-a-time in serial fashion or, in an alternate mode, essentially simultaneously using a master calibration switch.

By way of example one embodiment of the invention will now be described in more detail with reference to the accompanying drawings, in which :

Fig. 1 is a rear view of a gripper arm according to an embodiment of the invention ;

Fig. 2 is a side view taken along the line "C" of the gripper arm of Fig. 1 ;

Fig. 3 and 4 are rear and side views, respectively, of a Hall Effect device used in the embodiment of Figs. 1 and 2 ;

Fig. 5 and 6 are front and side views, respectively, of magnetic means used in the embodiment of Figs. 1 and 2 ;

Fig 7 is an illustrative block diagram of a mistake detector for a plurality of gripper arms ;

Fig 8 is a schematic diagram depicting electrical circuitry included in the mistake detector of Fig. 7 ;

Fig 9 is a graph showing output voltage from a Hall Effect sensor as a function of insert thickness ;

Fig 10 is a schematic diagram depicting the relationships of jaw members and magnetic means relative to a pivot point ;

Fig 11 is a detailed view of a portion of the gripper arm of Fig. 1 and 2 ;

Fig 12A is a detailed rear view of a portion of the gripper arm of Figs. 1 and 2 ;

Fig 12B is a detailed view of a portion of the gripper arm of Fig. 12A cut along the line "D" ;

Each gripper arm 16 according to an embodiment of the invention includes a housing 30 ; securing means 22 for securing the gripper arm to oscillating drive means such as shaft 17 ; a second article contacting or jaw member 26 ; and linkage means 30.

Gripper arms housing 20 has a distal end 32 and a proximal end 34. The means 22 for securing the gripper arm to the oscillating drive shaft 17 includes (1) a semi-cylindrical recess 36 at the top of the proximal end 34 of the gripper arm housing 20, and (2) a clamp member 38. The recess surface 36 is contiguous with flanges 40 on either side of the recess 36. The flanges are generally parallel to the major cylindrical axis of the recess 36. The clamp member 38 mates with the proximal end 34 of the housing 20. The clamp 38 is formed with comparable flanges 42 which mate with the flanges 40 of housing 20. The clamp 38 has a cylindrical sector portion 44 which forms a semi-cylindrical recess 46. Each of the flanges 40 and 42 have two threaded apertures therein appropriately aligned to receive threaded fasteners 48. In this respect, flanges 40 have apertures 50 and flanges 42 have apertures 52. The fasteners 48 secure clamp 38 to the proximal end 34 of the housing 20 so that the gripper arm is clamped onto the oscillating drive shaft 17. Each threaded fastener 48 extends through the aligned aperture 50,52 and the housing flanges 40 and the clamp flanges 42, respectively.

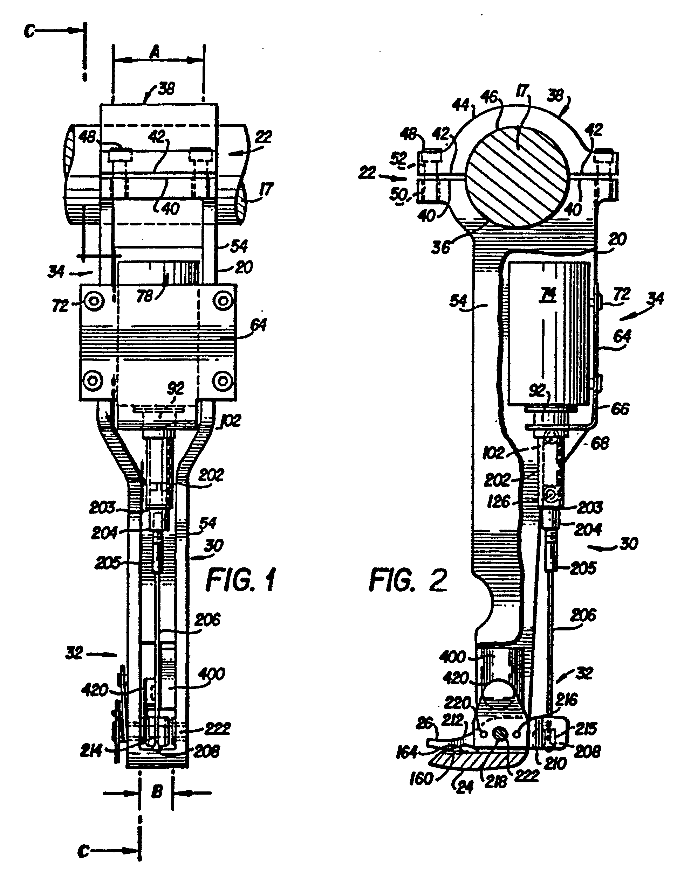

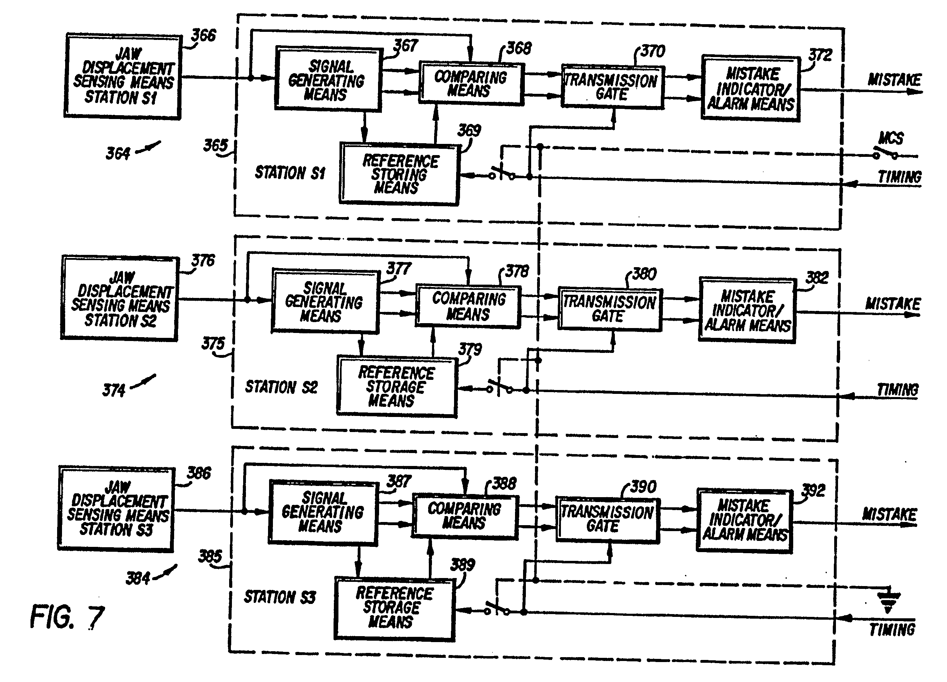

The gripper arm housing 20 comprises opposing side panels 54 which extend the height of the gripper arm. The two side panels 54 define a space therebetween. At the proximal end 34 of the gripper arm housing 20 the side panels 54 are parallel and separated by a distance A as shown in Fig 1. At the mid-section of the gripper arm housing the side panels 54 begin to converge to one another but separate before doing so and continue in parallel manner to the distal end 34 of the housing 20. At the distal end of the housing the side panels 54 are spaced apart at a distance B which is less than distance A as shown in Fig. 1.

In the region where the side panels 54 are separated by the distance A, a front panel is integral with the side panels 54 and each side panel 54 has at its back a perpendicularly extending flange.

The gripper arm housing 20 also includes a backplate 64 which has a back member 66 and a base member 68 perpendicular thereto. The back member 66 has four apertures, two on each side of the member 66, each of the four apertures being aligned with an aperture in the side panel flanges when the back member is assembled to housing 20. Threaded fasteners 72 extend through the aligned apertures to secure the backplate 64 to the gripper arm housing 20. The base member 68 of the backplate 64 is adapted for placement between the side panels 54 in an area where the side panels begin to converge.

The Solenoid 74 is mounted between the side panels 54 and has a plunger 92. The plunger 92 has an aperture extending therethrough along a diameter of the plunger 92 which receives a rollpin 102.

A spring 122 (see Fig. 11) is positioned in a cylindrical spacer or housing 202. The upper ring 124 of the inner spring 122 is secured by the plunger pin 102 to the solenoid plunger 92. The top of the cylindrical housing 202 abuts the lower end of the plunger 92.

The lower end of cylindrical housing 202 abuts a retaining ring 203. The retaining ring 203 is carried in an annular recess on a clevis-type end cap 204. End cap 204 axially receives a pin 205 which has an upper exterior portion thereof threaded for engagement in an axial aperture of end cap 204. An upper end of a cable 206 is connected to the lower end of pin 205. Cable 206 extends from the pin 205 to the distal end 32 of the gripper jaw. At its lower end the cable 206 has a ball 208 fixedly attached thereto.

Located in the cylindrical housing 202 in the manner described above, the inner spring 122 is held so that it is generally extended about 0.25 inches beyond its length at rest. The spring 122 is thus preloaded to have a desired spring force.

For the embodiment of Figs. 1 and 2 and 11, the upper jaw member 26 comprises a block member 210 and a curved protrusion 212. The underside of the protrusion is used to contact articles engaged by the gripper arm. The block member 210 has a narrow slit 214 at the back thereof through which the lower portion of cable 206 extends. At the base of the slit 214 is an essentially square chamber 215. Chamber 215 houses ball 208. When cable 206 is pulled upwarly, the ball 208 thereon, having a greater diameter than the width of the slit 214, bears against the top interior surface of the chamber 215, causing the upper jaw member 26 to pivot so that the upper jaw member 26 approaches the lower jaw member 24 so that the jaw essentially closes.

The block member 210 of second jaw 26 also has three apertures 216, 218 and 220 extending therethrough. The central aperture (aperture 218) accommodates a pivot pin 222 about which the jaw member 26 pivots.

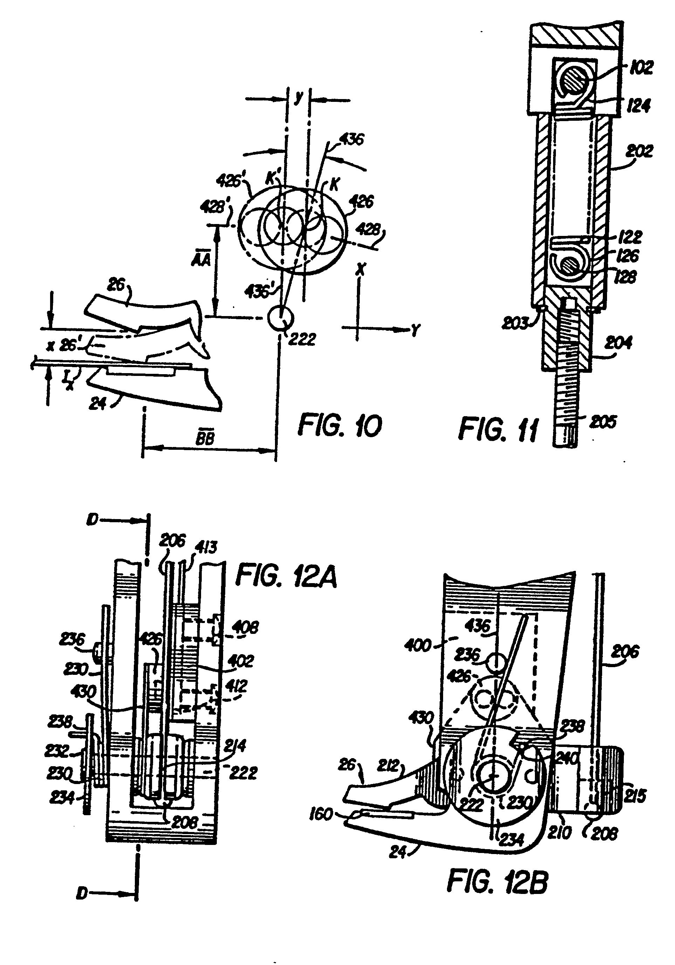

The embodiment of Figs. 1 and 2 and 11 further comprises means for biasing the jaw members in an open position. The biasing means includes torsion spring 230 (seen in Figs. 12A and 12B). An intermediate portion of the torsion spring 230 has a helical shape which is concentric with and fits over an exposed end of pivot pin 222, the end of pin 222 protruding beyond a side panel (the left side panel as seen in Fig. 12B) of the gripper arm. At its exposed, protruding end the pivot pin 222 has a head 232 formed thereon. A disc 234 is secured on the pivot pin 222 just inside its head 232. The helical portion of the torsion spring extends between the disc 234 and the left side panel of the gripper arm. At one of its ends the torsion spring 230 departs from its helical configuration and assumes a linear shape as it extends upwardly to a retaining pin 236 against a side of which it bears (see Fig. 12B). At its other end the torsion spring 230 extends through a square notch 238 formed on the circumference of the disc 234. The portion of the torsion spring 230 that extends through the disc 234 bears against a corner 240 of the notch 238. Spring 230 bears against corner 240 to exert a biasing force on the disc 234 and the pivot pin 222 whereby the upper jaw member 26 is normally held open in the absence of application of tension to the cable 206. When cable 206 and ball 208 thereon are urged upwardly, however, ball 208 bears against the upper interior surface of the chamber 215 and exerts a force on block 210 which overcomes the biasing force of the torsion spring 230 so that block 210 pivots about pin 222, thus causing jaw 26 to close.

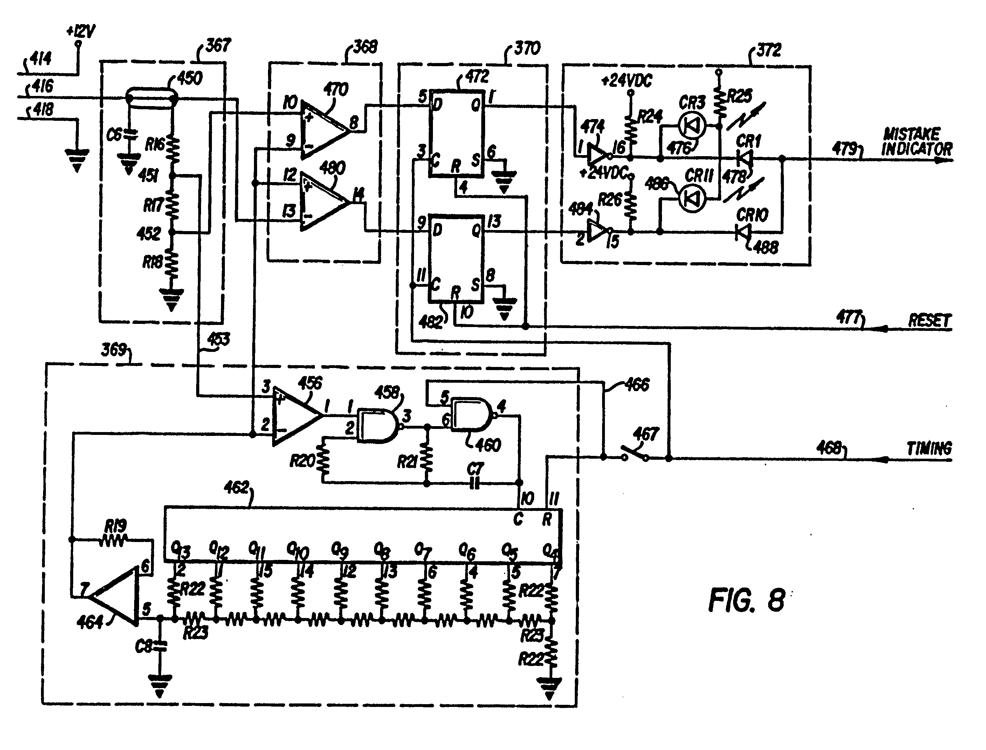

The insertion machine in which the gripper arm is mounted includes an improved double/miss mistake detector. This double/miss detector indicates when one of three gripper arms 161, 162, or 163, grip too few or too many inserts. More particularly, as shown in Fig. 7, there is provided a double/miss detector for each of the gripper arms, i.e., a detector 364, 374, and 384 for indicating when gripper arms 161, 162, and 163, respectively, grip the wrong number of inserts. Since detectors 364, 374 and 384 are substantially similar, only detector 364 will be described in detail and it will be understood that detectors 374 and 384 will operate in a similar manner under similar conditions.

Detector 364 serves to detect when gripper jaw $16_1$ has gripped too few or too many inserts. To this end, there are provided in detector 364, a jaw displacement sensing means 366 and a mistake indicating circuit 365. Jaw displacement sensing means 366 is mounted on the gripper jaws of arm $16_1$ as hereinafter described and serves to generate an electrical signal proportional to the relative displacement between the gripper jaws. When a proper number of inserts are known to be gripped between the gripper jaws, a switch is closed and a set pulse is provided to mistake indicating circuit 365 which then serves to convert the electrical signal proportional to jaw displacement to a stored reference signal. This stored reference signal is used by indicating circuit 365 during a preselected time of a machine cycle to determine if the electrical signal generated by sensing device 366 is within predetermined limits.

It will be appreciated that the jaws of the gripper arm are forced open prior to grabbing the insert and the jaws are forced open in order to release the insert. Since sensing means 366 continuously generates an electrical signal proportional to jaw displacement, it is desirable to indicate a mistake condition only during the portion of the machine cycle when the gripper jaws are holding the insert, i.e., when the inserts are being pulled from the stack. In the present embodiment, a timing signal is applied to indicating circuit 365 shortly after the gripper arm has pulled the insert from the stack and circuit 365 indicates a mistake condition only during this enabling signal. Thus, although sensing means 366 continuously generates an electrical signal proportional to jaw displacement, indicating circuit 365 indicates a mistake condition only when the jaws are displaced by the inserts.

To the end that mistake indicating circuit 365 may store a reference signal and indicate when a proper number of documents is not gripped by the gripper jaws, there are provided in indicator 365, a signal generating means 367 ; a comparing means 368 ; a storing means 369 ; a transmission gate 370 ; and, a mistake indicator/alarm means 372. Signal generating means 367 is connected to sensing means 366 and generates three electrical signals which are proportional to the signal generated by sensing means 366. The first signal generated is proportional to the signal generated by sensing means 366 and is applied to an input of storing means 369. The second signal generated is a fixed percentage greater than the first signal and corresponds to the

EP 0 287 143 B1

lower limit of acceptable jaw displacement. The third signal generated is a fixed percentage less than the first signal and corresponds to the upper limit of acceptable jaw displacement. Storing means 369 stores the first electrical signal from generating means 367 during the detector set-up or calibration time and thereafter applies that stored reference to comparing means 368. Comparing means 368 compares the second and third signals from generating means 367 with the stored reference signal from storing means 369 and generates a first electrical signal when the results of the comparison indicate that either too few inserts have been grabbed by the gripper jaw and a second electrical signal when the results of the comparison indicate that either too many inserts have been grabbed by the gripper jaw. The results of comparing means 368 are applied to the input of a transmission gate 370 which provides a mistake indication only after the gripper jaw pulls the insert from the stack.

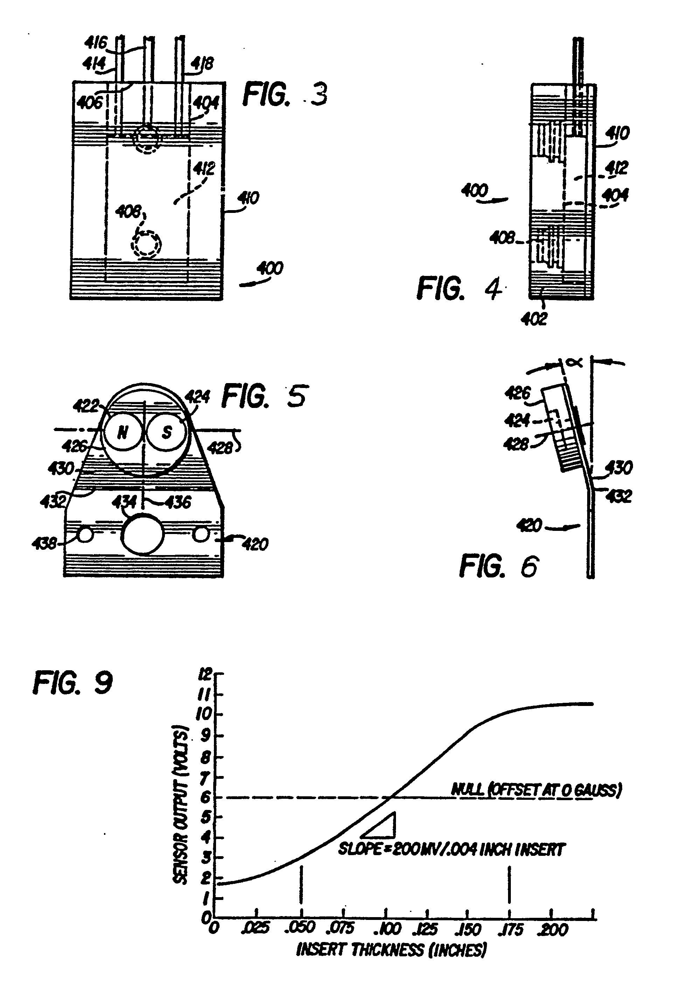

Figs. 3 and 4 show a sensor means 400 which, as shown in Figs. 1 and 2, is mounted near the distal end 32 of the gripper arm 16. The sensor means 400 is included in the jaw displacement sensing means such as sensing means 366 of Fig. 7. The sensor means 400 including a housing block 402 having a rectangular channel 404 formed on its front surface. The rectangular channel 404 has only one edge 406 thereof extending to an edge of the housing block 402. Two fasteners 408 having their shafts flush with the channel 404 extend through the housing block 402 to secure the sensor means 400 to the gripper arm in the location depicted in Figs. 1 and 2.

The sensor means 400 further includes a cover plate 410 which as seen in the rear view of Fig. 3 has rectangular dimensions comparable to the front rectangular dimensions of the housing block 402. The cover plate 410 is secured onto the housing block 402 by an epoxy adhesive material. A sensor element 412 is accommodated in the rectangular cavity deined by the housing block 402 and the cover plate 410. Sensor element 412 serves to sense the flux density of a generated field and generates an output signal proportional thereto. The sensor element 412 comprises a current-carrying electrical conductor across which a voltage is generated when the conductor is in a magnetic field, the magnitude of the generated voltage being proportional to the magnetic field flux intensity. The sensor element 412 is a Hall Effect sensor element. A cable 413 comprising three leads 414, 416, and 418 extends from the sensor element 412 to the circuit of Fig. 8 as hereinafter described.

Figs. 5 and 6 show a magnetic means 420 which is included in the jaw displacement sensing means such as means 366 and which cooperates with the sensor means 400. The magnetic means 420 includes two rare earth magnets 422 and 424, each being essentially disc-shaped. Each disc-shape magnet 422, 424 is mounted in corresponding circular apertures formed in a disc-shaped holder 426 having a diameter at least greater than the sum of the diameters of the magnets.

As seen in Fig. 5, magnet 422 has its North pole exposed while magnet 424 has its South pole exposed. The circumferences of the two disc-shaped magnets come close to touching on a line 428 which connects their centers.

The magnet holder 426 is further mounted in a mounting bracket 430. Mounting bracket 430 is a thin sheet of a resilient metal such as Spring Temper Brass. Bracket 430 is bent along a line 432 which separates an upper bracket portion from a lower bracket portion. In its natural state (i.e., not installed in the gripper arm so that no external mechanical forces are acting on the upper portion of the bracket 430), the upper bracket portion bends away from the lower bracket portion at an angle alpha which is approximately 15 degrees. The upper bracket portion has the magnet holder 426 mounted therein. The lower bracket portion has three apertures extending therethrough. A central aperture 434 is sized to accommodate the pin 222 which functions as the pivot point about which the second jaw members pivots with respect to the first jaw member. The central aperture 434 is positioned so that an imaginary line 436 extending through the diameter of aperture 434 and constructed perpendicular to line 428 intersects line 428 midway between the centers of magnets 422 and 424. The point of intersection of the imaginary line 436 and the line 428 bisected thereby is taken as the center of the magnetic field and labeled as point K in the drawings. Apertures 438 on either side of central aperture 434 are adapted to receive fasteners 440 which, as seen in Fig. 1, secure the magnet means 420 and particularly mounting bracket 430 thereof to the second jaw means 26.

As shown in Fig. 2, the magnetic means 420 is sandwiched between a gripper arm side panel on its one side and the sensor means 400 on the other gripper arm side panel on its other side. In order to be held in the position shown in Fig. 2 the resilient bracket 430 must be deflected to an essentially planar configuration rather than the configuration of Fig. 6 which shows a bending of the upper bracket portion about an angle alpha from the the lower bracket portion. When in the assembled configuration of Fig. 2, it is to be understood that the spring-like resilient biasing properties of the bracket 430 urge the essentially planar face of the disc-shaped magnet holder 426 against the essentially planar cover place 410 of the sensor 400. As seen hereinafter with respect to Fig. 2, movement of the second jaw member 26 about pivot point 222 causes the magnetic means 420 to slide across the sensor means 400, thereby changing the magnetic field flux detected by the sensor

5

element 412.

As mentioned above, cable 413 extending from the sensor means 400 includes the leads 414, 416, and 418 which are connected to the circuit of Fig. 8. The circuit of Fig. 8 is not located on the gripper arm itself, but on a circuit board remote from the gripper arm.

As shown in Fig. 8, leads 414 and 418 are connected to+12 volts and ground, respectively. Lead 416 is connected to a node 450 of the signal generating means 367. Signal generating means 367 includes a voltage division network which comprises resistors R16, R17 and R18. In the voltage network a node 451 occurs between the connection of resistors R16 and R17 and a node 452 occurs between the connection of resistors R17 and R18. Node 450 is connected by a capacitor C6 to ground.

The low side of resistor R16 (node 451) is connected by a lead 453 to storing means 369 illustrated as a sample and hold circuit, and particularly to a non-inverting input terminal of a linear operational amplifier 456 included therein. The sample and hold circuit further comprises NAND gates 458 and 460 ; a 14-stage binary counter 462 ; and, an operational amplifier 464. The inverting input terminal of the OP AMP 456 is connected both to the output terminal of the OP AMP 464 and through a resistor R19 to the inverting input terminal of the OP AMP 464. The output terminal of the OP AMP 456 is connected to a first input terminal of the NAND 458. The second input terminal of the NAND 458 is connected by resistor R20 and capacitor C7 in series both to the output terminal of NAND 460 and to the clock input pin of the counter 462. The second input terminal of the NAND 458 is also connected to both the output terminal of NAND 458 and to a first input terminal of NAND 460 through resistors R20 and R21. A second input terminal of NAND 468 and a selectively closable calibration switch 467. Lead 468, which carries a clocking signal, is connected to a reset pin of the counter 462 through the calibration switch 467.

Output pins 1, 2, 4-7, and 12-15 of counter 462 are each connected by one of the resistors R22 to a voltage devision network. The voltage devision network comprises nine resistors R23 arranged in series, the low side of each resistor connected (through a resistor R22) to a corresponding output pin of the counter 462 and the high side connected (through a resistor R22) to a neighboring output pin of the counter 462. Output pin 2 of the counter 462 is connected through its associated resistor R22 to the non-inverting input terminal of OP AMP 464 and through the resistor R22 and capacitor C8 to ground.

The circuit of Fig. 8 also illustrates in more detail the comparing means 368 ; the transmission gate 370 ; and the mistake indicator/alarm means 372. In this respect, the comparison means 368 comprises both "double" comparison means (such as operational amplifier 470) and "miss" comparison means (such as operational amplifier 480). Similarly, the transmission gate 370 comprises a "double" mistake gate (including a multivibrator such as "D"-type flip flop 472) and a "miss" mistake gate (including a similar multivibrator 482). The indicator alarm means 372 includes inverting drivers 474 and 484 and respective LEDs such as "double" LED 476 and- "miss"LED 486.

With respect to circuit elements used to detect a "double", the non-inverting input terminal of the OP AMP 470 is connected to the low side of resistor R17 (node 452) while the inverting input terminal of OP AMP 470 is connected to the calibrated reference signal occurring at the output terminal of the OP AMP 464. The output terminal of the OP AMP 470 is connected to the data input pin of the flip-flop 472. The set terminal of the flip-flop 472 is grounded, but its Q terminal is connected to the input terminal of the inverting driver 474. The clock pin of flip-flop 472 is ultimately connected to a lead 468 which carries a timing pulse indicative of the point in time of a machine cycle when the flip-flop 472 is to transmit the comparison results to the indicator alarm means 372 (i.e., the point in time in which the separation of the gripper jaw members 24 and 26 is to be detected). The reset pin of the flip-flop 472 is connected to a lead 477 which selectively carries a reset pulse.

The output terminal of the driver 474 is connected (1) through a resistor R24 to + 24 volts D.C. ; (2) to the cathode of LED 476 and through resistor R25 to + 24 volts D.C. ; and, (3) to the cathode of a diode 478, the anode of which is connected to a lead 479 which carries a signal indicative of a detected mistake to unillustrated portions of the system which have need to know of the mistake.

With the exception of the input terminals of the OP AMP 483, the elements 480, 482, 484, 486, and 488 used to detect a "miss" are connected in analogous manner with the elements 470, 472, 474, 476, and 478 as described above. However, the non-inverting input terminal of the OP AMP 480 is connected to the calibrated reference signal occurring at the output terminal of the OP AMP 464 while the inverting input terminal of OP AMP 480 is connected to the node 450 (the high side of resistor R16).

For the embodiment of the electrical circuitry associated with the Hall Effect sensor 400 as shown in Fig. 8, operational amplifiers 456, 464, 470, and 480 are included on a quad OP AMP chip ; NAND gates 458 and 460 are included on a quad 2-input NAND Schmitt trigger chip ; and, flip-flops 472 and 482 are included on a Dual "D" flip-flop chip. The resistors and capacitors shown in the embodiment of Fig. 8 have the values shown on the following charts :

Resistors

R16 = 100 ohm

R17 = 100 ohm

R18 = 4.7 K

R19 = 100 K

R20 = 100 K

R21 = 10 K

R22 = 200 K

R23 = 100 K

R24 = 10 K

R25 = 1.8 K

R26 = 10 K


Capacitors

C6 = 1 microF

C7 = 0.003 microF

C8 = 500 PicoF

Fig. 12A shows the relative positions of the second jaw member 26 and the magnetic means 420, particularly magnets 422 and 424, with respect to the pivot point 222. As the formerly opened second jaw member 26 pivoted about the pivot joint 222 to assume the position of the jaw 26' shown by phantom lines in Fig. 10, thereby closing upon the insert IX' the magnetic means 420 likewise pivoted about point 222 to assume the position of magnet holder 426' (also shown in phantom lines). Due to the Hall Effect, as the magnets 422 and 424 carried by holder 426 pivoted in the plane of their exposed polar faces about the pivot point 222, the flux density of their magnetic fields as detected by the sensor 412 changed. As the sensed flux of the resultant magnetic field changed, the voltage generated by the Hall Effect sensor 400 changed proportionally. In this regard, it is recalled that the sensor element 412 has a constant current applied thereto whereby the voltage generated across the electrical conductor included in the sensor element is proportional to the magnetic field flux in accordance with the well-known Hall Effect. The magnets 422 and 424, positionally biased by virtue of the resilient bracket 430, slid across the sensor 400 in accordance with a slide-by mode. In sliding by the sensor rather than approaching the sensor in a head-on mode, a constant spatial relationship is maintained between the plane of the exposed magnetic poles and the plane of the sensor element.

The biasing function performed by the resilient brackets 430 provides numerous advantages. For example, the bracket keeps the magnets 422 and 424 at a uniform spacing away from the sensor 412. If a uniform spacing were not maintained, the magnetic field experienced by the sensor 412 would not be uniform. The biasing of the bracket 430 against the magnets 422 and 424 also helps to keep our foreign particles such as dust. Moreover, the biasing overcomes problems which might arise due to the gripping of inserts of different dimensional tolerances.

As shown in Fig. 10, the pivoting of magnet holder 426 as the second jaw member 26 closes to engage an insert causes the imaginary line 436 to pivot to assume the position 436'. Recall that imaginary line 436 extends from the pivot point 222 to perpendicularly bisect the line 428 connecting the centers of magnets 422 and 424. Upon assuming the pivotal position in Fig. 10 as shown by the phantom lines, the point K' (the center of the magnetic field) at the intersection of lines 428' and 426' is displaced along the Y axis of Fig. 10 by a distance Y from its prior position K (at the intersection of lines 428 and 426) when the second jaw member was open with respect to the first jaw member.

The distance Y is related to the distance X separating the first and second jaw members by the expression

$$\frac{x}{y} = f\left(\frac{\overline{\overline{AA}}}{\overline{\overline{BB}}}\right)$$

where AA is the distance from the pivot point 222 to the center of the magnet field (point K) and where BB is the distance from the pibot point 222 to the point of the potential contact of the first and second jaw members. The value of the ratio x : y is thus a function of the ratio AA : BB. For the special case illustrated in Fig. 10 wherein the magnets 422 and 424 are arranged immediately next to one another (i.e. the magnets have edges practically touching at the point K) the above relationship becomes essentially linear over a portion of its range so that :

$$\frac{x}{y} \sim \frac{\overline{\overline{AA}}}{\overline{\overline{BB}}}$$

Thus, the positioning of the magnets 422 and 424 relative to one another is a factor in determining the nature of the relationship.

In Figure 9 the analog voltage output of the Hall Effect sensor 412 is seen as a function of insert thickness (i.e. the distance X separating the first and second jaw members at their point of potential contact. The thickness scale is in steps of 0.025 inch = 0.635 mm. When the first jaw member 24 and the second jaw member 26 contact one another (i.e. the jaw is "closed" with no insert engaged therebetween), the analog voltage output is slightly less than 2 volts. When the distance X separating the jaw members 24 and 26 is about 2.54 mm (0.1 inches), the sensor output voltage is in the neighbourhood of 5.5 volts. From the graph of Fig. 9 it can be seen than a 0.1 mm (.004 inch) change in insert thickness results in about a 200 milivolt increase in sensor output. The analog voltage output of the sensor 412 is applied on lead 416 to the circuit of Fig. 8.

The analog voltage output of sensor 412 on lead 416 is applied to the mistake indicating circuit 365. In this regard, the voltage output on lead 416 is applied both to the signal generating means 367 (the voltage divider network comprising resistors R16, R17, and R18) and to the comparing means 368 (i.e. to the non-inverting input terminal of OP AMP 480). Signal generating means 367 generates a first analog voltage signal on line 453 which is proportional to the analog voltage on lead 416. Signal generating means 367 also produces a second analog voltage signal at node 450 which is a fixed percentage greater than the voltage on line 453 and a third analog voltage signal at node 452 which is a fixed percentage less than the voltage on line 453. As seen hereinafter, voltages at nodes 450 and 452 are respectively used by the OP AMP 480 (to determine if none or too few articles (a "double) are engaged by the gripper arm). In this regard, the non-inverting input terminal of OP AMP 470 receives the analog voltage signal from node 452 (which is a fixed percentage less than the voltage on line 453) and the inverting input terminal of OP AMP 480 receives the analog voltage signal from node 450 (which is a fixed percentage greater than the voltage on line 453).

The "miss" OP AMP 480 compares the calibrated analog reference voltage generated by the sample and hold circuit 369 to the voltage signal at node 450 (which is a fixed percentage greater than the voltage signal on line 453). The voltage signal at node 450 corresponds to a lower limit of acceptable jaw displacement. If the output voltage at node 450 is less than the reference voltage, the output terminal of OP AMP 480 goes true to indicate that too few inserts have been grabbed.

The "double" OP AMP 470 compares the calibrated analog reference voltage to the voltage signal at node 452 (which is a fixed percentage less than the voltage signal on line 453). The voltage signal at node 452 corresponds to an upper limit of acceptable jaw displacement. If the voltage at node 452 exceeds the reference voltage (by reason of too great a distance separating the gripper jaws 24 and 26), then the output terminal of OP AMP 470 goes true to indicate that too many inserts have been grabbed. The values of resistors R16 and R17 are so chosen that the voltages at nodes 450 and 452 are at fixed percentages above and below, respectively, the voltage signal on line 453 to provide an acceptable tolerance range for insert thicknesses.

At a point in the machine cycle at which the distance x separating the gripper jaw members 24 and 26 is to be checked (and thus the thickness of the insert/inserts engaged therebetween), a timing pulse is applied on lead 486 to the flip-flops 472 and 482. If either flip-flop 472 or 482 is receiving a true signal at its data input pin when a timing pulse is received, the Q output pin of the respective flip-flop goes true so as to ultimately activate an appropriate LED indicative of the detected condition. If, for example, OP AMP 470 had a true output when flip-flop 472 receives a timing pulse, the Q output pin goes true so that a true signal is applied to inverting driver 474. The output of driver 474 goes false, so that LED 476 is activated to give a visible indication that a "double" occurred. Once the mistake indicator is observed and rectified, the operator can reset the flip-flop by causing a reset pulse to be applied on lead 477.

It has been mentioned earlier that the sample and hold circuit 369 generates a calibrated analog voltage signal for application to the OP AMPs 470 and 480. The calibrated reference voltage is generated when an operator (1) verifies (during a portion of the machine cycle in which the gripper arm of the insert station is to grab an insert) that the gripper jaw elements 24 and 26 are separated by the proper distance X (taking into consideration the number of inserts to be engaged and the thickness of each engaged insert) ; (2) closes the calibration switch 467 ; and, (3) then opens the calibration switch 467. When the switch 467 is closed the voltage signal at node 451 is applied to the non-inverting terminal of OP AMP 456. The circuit 369 holds the voltage at node 451 in binary form but provides an analog output from OP AMP 464 which is used as the calibrated analog reference voltage until the switch 467 is again closed for another calibration. Thus, the present invention provides a mistake detector that can be very easily and accurately calibrated.

From the foregoing it is seen that the present invention provides a method of easily calibrating the mistake detectors associated with each of the plurality of gripper arms positioned along a raceway of a multi-station insertion machine. In this respect, a lay operator who need not be a skilled technician can simply and quickly calibrate the mistake detectors for each gripper arm. The lay operator need only approach a first insert station S1 ; load the desired type of inserts into the hopper associated with insert station S1 ; jog the insertion machine through a portion of machine cycle during which time the operator can verify whether gripper arm 161 is properly engaging an appropriate number of inserts I1 at station S1 (meaning that gripper jaw elements 24 and 26 are separated by the proper distance during a portion of the machine cycle wherein the jaws engage the proper number of inserts) ; close the calibration switch 467 ; and, then open the calibration switch 467. The lay operator then moves to a second insert station S2 ; loads the desired type of inserts into the hopper associated with insert station S2 ; jogs the machine through a second machine cycle to verify the engagement of gripper arm 162 of a proper number of inserts I2 ; closes the calibration switch associated therewith ; and, closes the associated calibration switch. The lay operator then moves to a third insert station S3 whereat analogous steps are performed, and so on according to the number of insert stations provided with the particular machine being used.

An alternative approach for calibrating the mistake detectors associated with each of the plurality of gripper arms is for the lay operator to load each insert station S1, S2, and S3 with its respective inserts. The operator then jogs the insertion machine through a portion of the machine cycle during which time each gripper arm engages its respective insert. The operator then stops the machine and inspects each gripper arm to verify that a proper number of inserts are engaged by each gripper arm. If all gripper arms are engaging the proper number of inserts, the operator then closes a master calibration switch (MCS) which closes the calibration switch for each insert station S1, S2, and S3. A sequence of closing and then opening the master calibration switch enables each sample and hold circuit to hold its calibrated analog reference voltage until another calibration operation occurs.

## Claims

1. A gripper arm having two jaws (24, 26) for gripping articles and means (364) for detecting mistakes in gripping of the articles by monitoring the relative positions of the jaws, the mistake-detecting means comprising magnetic field creating means (420) connected to one jaw and a Hall effect sensor (400) connected to the other jaw, the output of the sensor being compared by a comparison means (368) with a reference signal to determine if the output generated by the sensor is within predetermined limits of the reference signal so as to determine if the proper number of articles are engaged by the gripper arm, characterized in that the sensor (400) presents a first planar surface and the magnetic-field-creating means (420) has a second, planar surface which is biased against said first planar surface, the arrangement being such that as the jaw members effect their gripping movement sliding displacement occurs between the two planar surfaces thereby changing the output of the sensor.

2. A gripper arm as claimed in claim 1 having a fixed jaw (24) and a movable jaw (26) characterized in that the sensor (400) is mounted on the fixed jaw and the magnetic-field-creating means (420) mounted on the movable jaw.

3. A gripper arm as claimed in claim 1 or 2 in which the magnetic-field-creating means comprises an exposed North pole (422) and an exposed South pole (424), both facing the sensor.

4. A gripper arm as claimed in claim 3 in which the magnetic-field-creating means comprises a pair of disc-shaped magnets (422, 424) with their circumferences in close proximity, one having a North pole exposed towards the sensor and the other a South pole.

5. A gripper arm as claimed in any of claims 1 to 4 in which the means for generating and storing a reference signal (367) comprises voltage sample and hold means (369) which uses the magnitude of the signal generated by the sensor when a proper number of articles are known to be engaged between said jaw members and produces an analog voltage related thereto for use as a calibrated reference voltage.

6. A gripper arm as claimed in any of claims 1 to 5 in which the said determining means includes means for generating a first voltage signal having a magnitude proportional to the signal generated by the sensor, means for generating a second voltage signal having a magnitude a fixed percentage greater than the magnitude of said first voltage signal, and, comparison (368) means for determining if the magnitude of the reference voltage exceeds the magnitude of said second voltage signal thereby indicating that too few articles are engaged between said jaw members.

7. A gripper arm as claimed in any of claims 1 to 6 in which the said determining means includes means for generating a first voltage signal having a magnitude proportional to the signal generated by the sensor, means for generating a third voltage signal having a magnitude a fixed percentage less than the magnitude of said first voltage signal and, comparison means (368) for determining if the magnitude of the reference voltage is exceeded by the magnitude of said third voltage signal thereby indicating that too many articles are engaged between said jaw members.

8. A gripper arm as claimed in any of the preceding claims in which the magnetic-field-creating means is carried on a resilient mounting bracket (430) which biases it against the sensor.


**Patentansprüche**

1. Greiferarm mit zwei Greiferklauen (24, 26) zum Erfassen von Gegenständen und mit Fehlererkennungsmitteln (364) zum Feststellen von Fehlern beim Greifen der Gegenstände durch Überwachen der relativen Stellungen der Greiferklauen, wobei die Fehlererkennungsmittel magnetische Felderzeugungsmittel (420), die mit einer Greiferklaue verbunden sind, und einen Hall-Effekt-Detektor (400) enthalten, der mit der anderen Greiferklaue verbunden ist und wobei ferner der Ausgang des Hall-Effekt-Detektors durch Vergleichermittel (368) mit einem Bezugssignal verglichen wird, um zu bestimmen, ob der von dem Hall-Effekt-Detektor erzeugte Ausgang innerhalb vorbestimmter Grenzen des Bezugssignales liegt und um damit festzustellen, ob die richtige Anzahl von Gegenständen von dem Greiferarm erfaßt worden ist, dadurch gekennzeichnet, daß der Hall-Effekt-Detektor (400) eine erste ebene Oberfläche darbietet und die Magnetfelderzeugungsmittel (420) eine zweite ebene Oberfläche darbieten, welche gegen die erste ebene Oberfläche vorgespannt ist, wobei die Anordnung so getroffen ist, daß bei Durchführung der Greiferbewegung der Greiferklauen eine Gleitbewegungs-Verlagerung zwischen den beiden ebenen Oberflächen stattfindet, wodurch der Ausgang des Hall-Effekt-Detektors verändert wird.

2. Greiferarm nach Anspruch 1, mit einer feststehenden Greiferklaue (24) und einer beweglichen Greiferklaue (26), dadurch gekennzeichnet, daß der Hall-Effekt-Detektor (400) an der feststehenden Greiferklaue angeordnet ist, während die Magnetfelderzeugungsmittel (420) an der beweglichen Greiferklaue angeordnet sind.

3. Greiferarm nach Anspruch 1 oder 2, bei welcher die Magnetfelderzeugungsmittel einen freiliegenden Nordpol (422) und einen freiliegenden Südpol (424) enthalten, welche beide dem Hall-Effekt-Detektor zugekehrt sind.

4. Greiferarm nach Anspruch 3, bei welchem die Magnetfelderzeugungsmittel ein Paar scheibenförmiger Magnete (422, 424) enthalten, deren Umfangsgrenzen nahe beieinander liegen, wobei der eine einen dem Hall-Effekt-Detektor zugekehrten freiliegenden Nordpol und der andere einen Südpol aufweist.

5. Greiferarm nach einem der Ansprüche 1 bis 4, bei welchem die Mittel zur Erzeugung und Speicherung eines Bezugssignales (367) einen Spannungs-Abtast- und Haltekreis (369) enthalten, der die Größe des von dem Hall-Effekt-Detektor erzeugten Signales auswertet, wenn bekanntermaßen die richtige Anzahl von Gegenständen zwischen den Greiferklauen erfaßt wird und eine Analogspannung erzeugt, welche damit in Beziehung steht, um als Eich-Bezugsspannung zu dienen.

6. Greiferarm nach einem der Ansprüche 1 bis 5, bei welchem die Fehlererkennungsmittel Einrichtungen zur Erzeugung eines ersten Spannungssignales mit einer Größe proportional zu dem von dem Hall-Effekt-Detektor erzeugten Signal, ferner Einrichtungen zur Erzeugung eines zweiten Spannungssignales mit einer Größe um einen festen Prozentsatz größer als die Größe des ersten Spannungssignales, und Vergleichermittel (368) enthalten, um festzustellen, ob die Größe der Bezugsspannung über der Größe des zweiten Spannungssignales liegt, wodurch angezeigt wird, daß zu wenige Gegenstände zwischen den Greiferklauen erfaßt worden sind.

7. Greiferarm nach einem der Ansprüche 1 bis 6, bei welchem die Fehlererkennungsmittel Einrichtungen zur Erzeugung eines ersten Spannungssignales mit einer Größe proportional dem von dem Hall-Effekt-Detektor erzeugten Signal, ferner Einrichtungen zur Erzeugung eines dritten Spannungssignales mit einer Größe ent-

EP 0 287 143 B1

sprechend einem festen Prozentsatz kleiner als die Größe des ersten Spannungssignales; und schließlich Vergleichermittel (368) enthalten, um festzustellen, ob die Größe der Bezugsspannung von der Größe des dritten Spannungssignales übertroffen wird, um anzuzeigen, daß zu wenig Gegenstände zwischen den Greiferklauen erfaßt worden sind.

8. Greiferarm nach einem der vorhergehenden Ansprüche, bei welchem die Magnetfelderzeugungsmittel von einer federnden Befestigungsklammer (430) getragen werden, die gegen den Hall-Effekt-Detektor vorgespannt ist.


**Revendications**

1. Bras de préhension ayant deux mâchoires (24, 26) pour saisir des articles et un moyen (364) pour détecter des erreurs dans la saisie des articles par la surveillance des positions relatives des mâchoires, le moyen détecteur d'erreurs comprenant un moyen (420) créant un champ magnétique réuni à une mâchoire et un détecteur (400) à effet Hall réuni à l'autre mâchoire, le signal de sortie du détecteur étant comparé par un moyen (368) de comparaison à un signal de référence pour déterminer si le signal de sortie engendré par le détecteur se trouve à l'intérieur de limites prédéterminées du signal de référence, de manière à déterminer si le nombre convenable des articles est saisi par le bras de préhension, caractérisé en ce que le détecteur (400) présente une première surface planaire et le moyen (420) de création du champ magnétique a une seconde surface planaire qui est rappelée contre la première surface planaire, l'arrangement étant tel que lorsque les mâchoires effectuent leur mouvement de saisie, un déplacement de glissement se produit entre les deux surfaces planaires, ce qui modifie le signal de sortie du détecteur.

2. Bras de préhension selon la revendication 1 ayant une mâchoire fixe (24) et une mâchoire mobile (26) caractérisé en ce que le détecteur (400) est monté sur la mâchoire fixe et le moyen (420) de création d'un champ magnétique est monté sur la mâchoire mobile.

3. Bras de préhension selon la revendication 1 ou 2 dans lequel le moyen de création d'un champ magnétique comprend un pôle Nord exposé (422) et un pôle Sud exposé (424), tous deux faisant face au détecteur.

4. Bras de préhension selon la revendication 3 dans lequel le moyen de création d'un champ magnétique comprend une paire d'aimants (422, 424) analogues à des disques avec leurs circonférences étroitement proches, l'un ayant un pôle Nord exposé en direction du détecteur et l'autre un pôle Sud.

5. Bras de préhension selon l'une quelconque des revendications 1 à 4 dans lequel le moyen pour engendrer et mémoriser un signal de référence (367) comprend un moyen (369) de prélèvement et de maintien d'une tension qui utilise la grandeur du signal engendré par le détecteur quand un nombre convenable d'articles est connu comme étant engagé entre les mâchoires et produit une tension analogique en relation avec ce signal pour servir de tension de référence étalonnée.

6. Bras de préhension selon l'une quelconque des revendications 1 à 5 dans lequel le moyen de détermination comprend un moyen pour engendrer un premier signal de tension ayant une grandeur proportionnelle au signal engendré par le détecteur, un moyen pour engendrer un second signal de tension ayant une grandeur supérieure d'un pourcentage fixé à la grandeur du premier signal de tension et un moyen (368) de comparaison pour déterminer si la grandeur de la tension de référence excède la grandeur du second signal de tension, indiquant de cette façon que trop peu d'articles sont saisis entre les mâchoires.

7. Bras de préhension selon l'une quelconque des revendications 1 à 6 dans lequel le moyen de détermination comprend un moyen pour engendrer un premier signal de tension ayant une grandeur proportionnelle au signal engendré par le détecteur, un moyen pour engendrer un troisième signal de tension ayant une grandeur supérieure d'un pourcentage fixé à la grandeur du premier signal de tension et un moyen (368) de comparaison pour déterminer si la grandeur de la tension de référence est dépassée par la grandeur du troisième signal de tension, indiquant de cette façon que trop d'articles sont saisis entre les mâchoires.

8. Bras de préhension selon l'une quelconque des revendications précédentes dans lequel le moyen de création d'un champ magnétique est porté par un support élastique de montage (430) qui le rappelle contre le détecteur.

FIG. 1

FIG. 2

FIG. 7

FIG. 3

FIG. 4

FIG. 5

FIG. 6

FIG. 9

SLOPE = 200 MV/.004 INCH INSERT

NULL (OFFSET AT 0 GAUSS)

SENSOR OUTPUT (VOLTS)

INSERT THICKNESS (INCHES)

FIG. 8

FIG. 10

FIG. 11

FIG. 12A

FIG. 12B